**Europäisches Patentamt**

**European Patent Office**

**Office européen des brevets**

(19)

(11) Veröffentlichungsnummer: **0 242 548 B1**

(12) **EUROPÄISCHE PATENTSCHRIFT**

(45) Veröffentlichungstag der Patentschrift:
**18.10.89**

(51) Int. Cl.⁴: **B60G 11/12, F16F 1/36**

(21) Anmeldenummer: **87103227.2**

(22) Anmeldetag: **06.03.87**

(54) **Vorrichtung mit einem flächigen Bauteil aus faserverstärktem Kunststoff und einem endseitigen Krafteinleitungsteil.**

(30) Priorität: **24.04.86 DE 3613804**

(43) Veröffentlichungstag der Anmeldung:
**28.10.87 Patentblatt 87/44**

(45) Bekanntmachung des Hinweises auf die Patenterteilung:
**18.10.89 Patentblatt 89/42**

(84) Benannte Vertragsstaaten:
**DE ES FR GB IT**

(56) Entgegenhaltungen:
**EP-A- 0 106 249**
**EP-A- 0 161 155**
**WO-A- 86/02601**
**FR-A- 2 570 030**
**GB-A- 1 466 060**

**PATENT ABSTRACTS OF JAPAN, Band 5,**
**Nr. 43 (M-60)[715], 23. März 1981; &**
**JP-A-55 166 536 (NIPPON HATSUJIYOU K.K.) 25-12-1980**

(73) Patentinhaber: **AUDI AG,**
**Auto-Union-Strasse 1 Postfach 220,**
**D-8070 Ingolstadt(DE)**

(72) Erfinder: **Haldenwanger, Hans-Günther, Dipl.-Ing.,**
**Behaimstrasse 16 a, D-8070 Ingolstadt(DE)**
Erfinder: **Schäper, Siegfried, Dr.-Ing., Am Fort 5,**
**D-8071 Wettstetten(DE)**
Erfinder: **Schneeweiss, Manfred, Vorwerkstrasse 47,**
**D-8071 Wettstetten(DE)**

(74) Vertreter: **Le Vrang, Klaus, AUDI AG**
**Postfach 220 Patentabteilung I/EQP,**
**D-8070 Ingolstadt(DE)**

**Beschreibung**

Die Erfindung betrifft eine Vorrichtung mit einem flächigen Bauteil aus faserverstärktem Kunststoff und einem endseitigen Krafteinleitungsteil, insbesondere an einer Blattfeder oder einem Querlenker für Kraftfahrzeuge, gemäß dem Oberbegriff des Patentanspruches 1.

Bei gattungsgemäßen Vorrichtungen, z. B. einer Blattfeder aus faserverstärktem Kunststoff, ist der Krafteinleitung in das Bauteil besondere Aufmerksamkeit zu widmen, weil Schäden aufgrund vor übermäßigen Biegemomenten und/oder Schubspannungen nahezu regelmäßig am Krafteinleitungsteil ihren Ursprung haben bzw. dort auftreten. Im Falle einer quer in ein Kraftfahrzeug eingebauten Blattfeder ist es so, daß diese sowohl Vertikalkräfte aufgrund der statischen und dynamischen Achslast als auch hohe Seitenkräfte beim Durchfahren von Kurven aufnehmen muß. Ggf. können auch beim Abbremsen des Kraftfahrzeuges noch beträchtliche Längskräfte oder Torsionsmomente auftreten. Die Vertikalkräfte wirken dabei senkrecht auf die gerichteten Faserschichten der Blattfeder, während die Seitenkräfte parallel bzw. in Faserrichtung wirken. Besonders hohe Biegemomente und Schubspannungen treten beim Durchfahren von Kurven auf, weil sich hier zu den großen Seitenkräften auch noch eine große Vertikalkraft aufgrund der dynamischen Achsgewichtsverlagerung summiert. Diese hohen Belastungen können zu Überbeanspruchungen insbesondere im Bereich des Krafteinleitungsteiles führen; als auftretende Schäden sind Ablösen der oberen und unteren Schichten aus gerichteten Fasern, Faserrisse an diesen Schichten sowie Deformationen am Bauteil zu beobachten. Aufgabe der Erfindung ist es, bei der gattungsgemäßen Vorrichtung mit einfachen Mitteln die Beanspruchungen im Bereich des Krafteinleitungsteiles zu verringern.

Diese Aufgabe wird mit den Merkmalen des Patentanspruches 1 gelöst. Erfindungsgemäß erfolgt der Kraftangriff am Krafteinleitungsteil derart asymmetrisch zu den Faserebenen bzw. zur Aufnahme des Bauteil- bzw. Blattfederendes im Krafteinleitungsteil, daß dieses durch die Seitenkräfte ein Drehmoment erfährt, welches den Vertikalkräften aufgrund des Achsgewichtes entgegengerichtet ist und zu einem beträchtlichen Abbau der Biegespannungen im Bereich des Krafteinleitungsteiles und damit verbunden zur Verringerung der Schubspannungen führt. Die Definition der Länge des Bauteils bzw. des Blattfederendes über den Kraftangriffspunkt im Krafteinleitungsteil hinaus bewirkt einen gleichmäßigen Spannungsabbau und eine Verringerung der Schubspannungen bei entgegengerichteten Seitenkräften.

Vorteilhafte Weiterbildungen der Erfindung sind den Merkmalen der Patentansprüche 2 bis 5 entnehmbar. So wird durch die Merkmale des Patentanspruches 2 eine sichere Aufnahme des Bauteiles im Krafteinleitungsteil bei gleichmäßiger Spannungsverteilung erzielt. Als besonders vorteilhaft und belastungsfähig hat sich eine keilförmige Gestaltung des Bauteiles herausgestellt.

Sofern an dem Bauteil zusätzlich einseitig relativ hohe Torsionsmomente angreifen, wie dies beispielsweise bei einer radführenden Blattfeder beim Abbremsen eines Kraftfahrzeuges der Fall sein kann, kann der Kraftangriffspunkt am Krafteinleitungsteil entsprechend Patentanspruch 4 asymmetrisch angeordnet sein. In herstellungstechnisch günstiger Weise kann das Krafteinleitungsteil gemäß den Merkmalen des Patentanspruches 5 gestaltet sein. Durch die angegebene Anordnung der Klemmschrauben bleibt der wirksame Querschnitt des Bauteiles bzw. der Blattfeder voll erhalten.

Ein Ausführungsbeispiel der Erfindung ist im folgenden mit weiteren Einzelheiten näher erläutert. Die Zeichnung zeigt in

Fig. 1 eine Vorrichtung mit einer Blattfeder eines Kraftfahrzeuges als flächiges Bauteil und einem Krafteinleitungsteil in einem Schnitt gemäß Linie I-I der Fig. 2,

Fig. 2 eine Ansicht des Krafteinleitungsteiles in Richtung des Pfeiles Z der Fig. 1 und

Fig. 3 eine Ansicht gemäß Linie III-III der Fig. 2 in der Teilungsebene des Krafteinleitungsteiles.

Eine Vorrichtung 10 weist eine Blattfeder 12 als flächiges Bauteil und ein Krafteinleitungsteil 14 auf. Die Blattfeder 12 aus glasfaserverstärktem Kunstharz setzt sich aus einer oberen Schicht 16, einer unteren Schicht 18 und einer mittleren Verbundschicht 20 zusammen. Die obere und untere Schicht 16, 18 weist in Längserstreckung der Blattfeder 12 gerichtete Glasfasern auf. Die Verbundschicht 20 enthält in einer Kunstharzmatrix eingebettete, ungerichtete Fasern.

Die Blattfeder 12 weist einen rechteckigen Querschnitt auf. Deren Höhe $h$ verringert sich zum Krafteinleitungsteil 14 zu, nimmt aber über eine Länge $y$ keilförmig ansteigend wieder zu. Dieser keilförmige Endabschnitt 22 ist in dem Krafteinleitungsteil 14 formschlüssig eingeklemmt, wobei das Krafteinleitungsteil 14 sowohl an der Stirnseite als auch an den Umfangsseiten des Abschnittes 22 unter Vorspannung anliegt. Dazu ist das Krafteinleitungsteil 14 in ein Basisteil 24 und ein Oberteil 26 in einer etwa der neutralen Faser 28 der Blattfeder 12 entsprechenden Ebene unterteilt, wobei die beiden Teile mittels mehrerer Schrauben 30, 32 zusammengespannt sind. Die beiden Schrauben 32 greifen dabei in stirnseitige Ausnehmungen 34 der Blattfeder 12 ein, während die beiden Schrauben 30 bzw. deren korrespondierende Gewindebohrungen 36 seitlich neben der Blattfeder 12 liegen. Durch diese Anordnung der Schrauben 30, 32 wird einerseits eine gleichmäßige Klemmung und ein hochfester Formschluß der Schraubenfeder 12 in der entsprechenden Ausnehmung des Krafteinleitungsteiles 14 erzielt, ohne daß jedoch der wirksame Querschnitt der Blattfeder 12 geschwächt wird.

An das Krafteinleitungsteil 14 bzw. an das Basisteil 24 ist ein Lagerauge 38 angeformt, mittels welchem die Blattfeder 12 bzw. das Krafteinleitungsteil 14 mit einer nicht dargestellten Radführung des Kraftfahrzeuges verbindbar ist. Über das Lagerauge 38 werden die Seitenkräfte Fs bzw. die Achslasten FG in die Blattfeder 12 eingeleitet. Dabei ist der theoretische Angriffspunkt 40 des Lagerauges 38 um ein Maß a asymmetrisch zur neutralen Faser 28 bzw. zur Faserebene der Blattfeder 12 entgegen der Kraft FG versetzt. Durch diesen Versatz übt die Seitenkraft Fs ein Drehmoment auf das Krafteinleitungsteil 14 aus, welches der Kraft FG entgegengerichtet ist.

Aus den beiden Kräften Fs und FG ergibt sich eine resultierende Kraft FR, die zu einer Verringerung der Biegemomente aufgrund der auf die Blattfeder 12 wirkenden Achslast und der Schubspannungen im Bereich der neutralen Faser 28 insbesondere um den Punkt 42 ergibt, der sich aus der Projektion der resultierenden Kraft FR durch die neutrale Faser 28 der Blattfeder 12 definiert.

Die Blattfeder 12 ist so dimensioniert und im Krafteinleitungsteil 14 aufgenommen, daß deren Einspannlänge y im Krafteinleitungsteil 14, gerechnet von einer Senkrechten 44 durch den Kraftangriffspunkt 40 bis zu deren Stirnseite, etwa gleich der Länge X ist, die sich aus eben dieser Senkrechten 44 und dem Durchstoßpunkt 42 bestimmt. Diese Länge Y entspricht etwa dem Maß a, welches· den Versatz des Angriffspunktes 40 aus der neutralen Faser 28 der Blattfeder 12 heraus definiert.

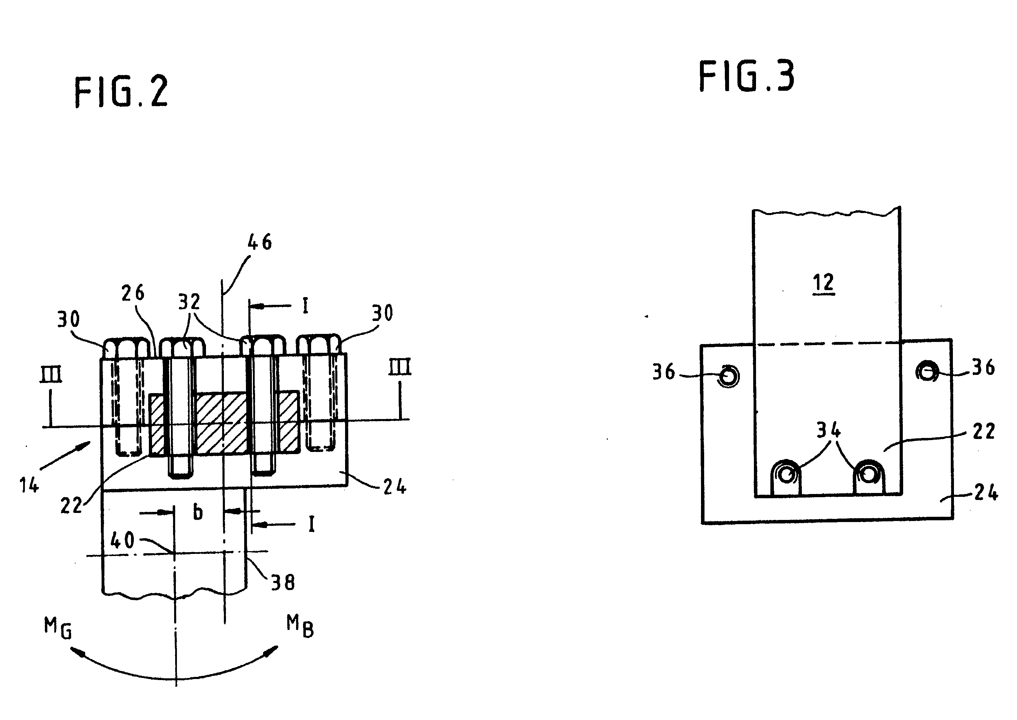

Wie die Fig. 2 zeigt, ist das Lagerauge 38 gegenüber der senkrechten Mittelebene 46 der Blattfeder 12 um ein Maß b aus der Mitte versetzt. Dadurch ergibt sich aufgrund der Kraft FG ein auf die Blattfeder 46 wirkendes Drehmoment MG. Dieses Drehmoment wirkt im Sinne einer Verringerung eines weit größeren Drehmomentes MB, welches beim Abbremsen des Kraftfahrzeuges über dessen Radbremsen auf die durch die Blattfeder 12 gebildete Radführung einwirkt. Dieses Drehmoment MB errechnet sich dann abzüglich des Gegendrehmomentes MG aufgrund des Versatzes b des Lagerauges 38 gegenüber der Blattfeder 12.

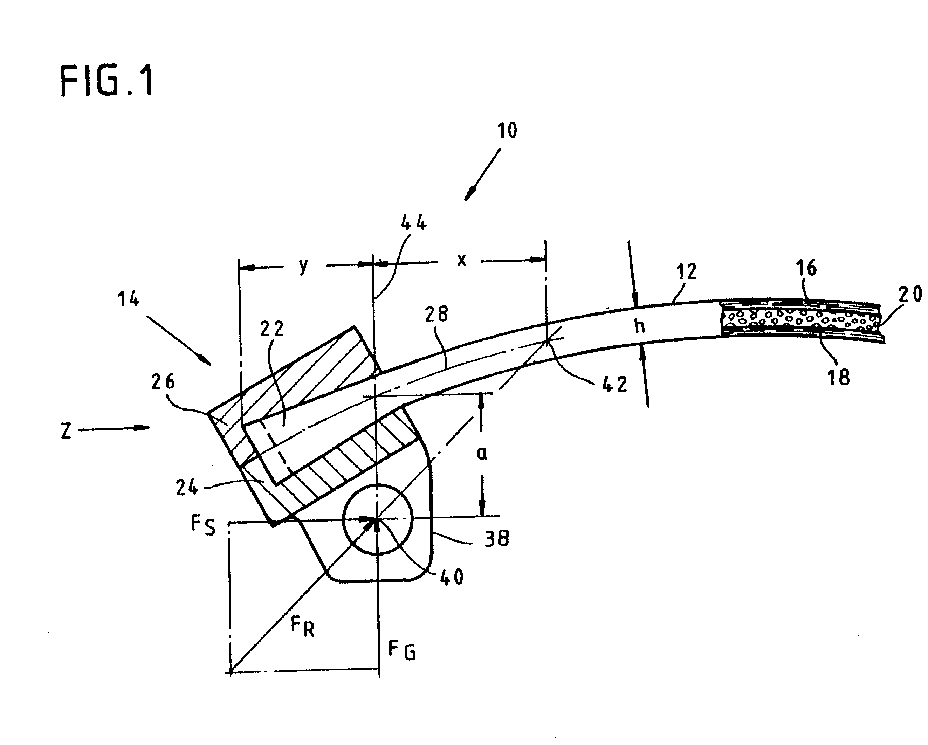

Wie aus der Zeichnung, insbesondere Fig. 1, ohne weiteres ersichtlich ist, läuft der Endabschnitt 22 der Blattfeder 12 ohne wesentliche Richtungsänderung der Fasern in der oberen und unteren Schicht 16, 18 der Blattfeder 12 in das Krafteinleitungsteil 14 ein. Dies ist von wesentlicher Bedeutung, weil dadurch sowohl Seitenkräfte Fs in der eingezeichneten Richtung als auch entgegen dieser Richtung übertragbar sind, ohne daß in den Schichten 16, 18 unzulässig hohe Beigespannungen oder unzulässig hohe Schubspannungen in der Verbundschicht 20 auftreten.

Anstelle der dargestellten Keilform des Endabschnittes 22 sind auch andere, formschlüssige Profile, beispielsweise ein Doppelkeil mit zwei kürzeren, divergierend oder konvergierend zueinander verlaufenden Keilabschnitten denkbar.

**Patentansprüche**

1. Vorrichtung mit einem flächigen Bauteil (12) aus faserverstärktem Kunststoff und einem endseitigen Krafteinleitungsteil (14), insbesondere Blattfeder oder Querlenker für Kraftfahrzeuge, wobei das Bauteil eine obere und eine untere Schicht aus gerichteten Fasern aufweist, die durch eine mittlere Verbundschicht miteinander verbunden sind und das Krafteinleitungsteil als Abschlußteil insbesondere senkrechte als auch parallel zur Faserrichtung auftretende Kräfte einleitet, **gekennzeichnet durch** die folgenden Merkmale:

a) Das flächige Bauteil (12) läuft im wesentlichen ohne Faserrichtungsänderung in das Krafteinleitungsteil (14) ein und ist in diesem gehalten,

b) der Kraftangriff am Krafteinleitungsteil (14) erfolgt um ein Maß a asymmetrisch zu den Faserebenen (neutrale Faser 28) derart, daß eine Resultierende Fr aus senkrechten und parallel zur Faserrichtung wirkenden Kräften Fs, Fg eine Spannungsverminderung und Momentenentlastung am Bauteil (12) bewirkt und

c) das flächige Bauteil (12) ist in dem Krafteinleitungsteil (14) über die senkrechte Projektion des Kraftangriffspunktes (40) hinaus auf eine Länge y gehalten, die zumindest zwei Drittel der Länge x vom Kraftangriffspunkt (40) zur Resultierenden in der Faserebene oder zumindest dem Maß a entspricht.

2. Vorrichtung nach Anspruch 1, **dadurch gekennzeichnet, daß**

d) das flächige Bauteil (12) durch das Krafteinleitungsteil (14) endseitig vollkommen umschlossen ist und

e) in diesem formschlüssig vornehmlich durch Klemmung gehalten ist.

3. Vorrichtung nach den Ansprüchen 1 und 2, **dadurch gekennzeichnet, daß**

f) das flächige Bauteil (12) innerhalb des Krafteinleitungsteiles (14) keilförmig gestaltet ist.

4. Vorrichtung nach Anspruch 1, **dadurch gekennzeichnet, daß**

g) der Kraftangriffspunkt (40) am Krafteinleitungsteil (14) auch asymmetrisch zur Mittelachse des flächigen Bauteiles (12) um ein Maß b versetzt ist.

5. Vorrichtung nach einem oder mehreren der vorhergehenden Ansprüche, **dadurch gekennzeichnet, daß**

h) das Krafteinleitungsteil (14) in einer Ebene im wesentlichen parallel zur neutralen Faser (28) des Bauteiles (12) geteilt ausgebildet und

i) durch Klemmschrauben (30, 32) zusammenspannbar ist, wobei die Klemmschrauben (30, 32) derart angeordnet sind, daß sie keine Unterbrechung von Fastersträngen im Bauteil (12) bewirken.

**Claims**

1. Device with a laminar component (12), made of fibre-reinforced synthetic material, and an end force-transmitting member (14), in particular a flat spring or a transverse link for motor vehicles, in which the component has an upper and a lower layer made of aligned fibres which are joined to one another by a central compound layer and in which, as the terminal member, the force-transmitting member transmits, in particular, vertical forces as well as forces which occur parallel to the fibre direction, characterized by the following features:

a) The laminar component (12) enters the force transmitting member (14) and is held in it without any substantial change in direction of the fibres,

b) the application of force to the force-transmitting member (14) takes place asymmetrically to the fibre plane (neutral fibre 28) by a distance a in such a way that a resultant Fr of the forces Fs and Fg acting perpendicularly and parallel to the fibre direction produces a reduction in the stress and a relief of the moment in the component (12), and

c) the laminar member (12) is held in the force transmitting member (14) beyond the vertical projection of the force application point (40) for a length y which corresponds to at least two thirds of the length x from the force application point (40) to the resultant in the fibre plane or at least to the distance a.

2. Device according to claim 1, characterized in that:

d) the end of the laminar component (12) is completely enclosed by the force-transmitting member (14), and

e) is held positively in it, principally by clamping.

3. Device according to Claims 1 and 2, characterized in that:

f) inside the force-transmitting member (14) the laminar component (12) is wedge shaped.

4. Device according to Claim 1, characterized in that:

g) the force application point (40) on the force transmitting member (14) is also offset asymmetrically to the central axis of the laminar component (12) by a distance b.

5. Device according to one or more of the preceding Claims, characterized in that:

h) the force-transmitting member (14) is designed so that it divides in a plane essentially parallel to the neutral fibre (28) of the component (12), and i) can be drawn together by clamping screws (30, 32), the clamping screws (30, 32) being arranged in such a way that they do not produce any interruption in the fibre strands in the component (12).

**Revendications**

1. Dispositif comportant un composant plat (12) formé d'une matière plastique renforcée par des fibres et une pièce extrême d'application de force (14), notamment pour un ressort à lames ou un bras oscillant transversal pour véhicules automobiles, le composant comportant une couche supérieure et une couche inférieure formées de fibres orientées et qui sont reliées entre elles par une couche centrale de liaison, la pièce d'application de force servant de pièce de fermeture transmettant des forces exercées notamment aussi bien perpendiculairement que parallèlement à la direction des fibres, caractérisé par les particularités suivantes:

a) le composant plat (12) est engagé sensiblement sans modification d'orientation des fibres dans la pièce d'application de force (14) et est maintenu dans celle-ci,

b) l'application de force à la pièce d'application de force (14) est effectuée à une distance a et asymétriquement par rapport aux plans de fibres (fibre neutre 28) de telle sorte qu'une résultante Fr de forces Fs, Fa, agissant perpendiculairement et parallèlement à la direction des fibres, produise une diminution de contrainte et une réduction de moment dans le composant (12) et,

c) le composant plat (12) est maintenu dans la pièce d'application de force (14), après la projection verticale du point d'application de force (40), sur une longueur y qui correspond au moins aux deux tiers de la longueur x comprise entre le point d'application de force (40) et la résultante dans le plan de fibres, ou bien au moins à la dimension a.

2. Dispositif selon la revendication 1, caractérisé en ce que:

d) le composant plat (12) est entouré complètement à son extrémité par la pièce d'application de force (14) et

e) il est maintenu dans celle-ci essentiellement par blocage par conjugaison de formes.

3. Dispositif selon une des revendications 1 et 2, caractérisé en ce que:

f) le composant plat (12) est pourvu d'un profil en forme de coin à l'intérieur de la pièce d'application de force (14).

4. Dispositif selon la revendication 1, caractérisé en ce que:

g) le point d'application de force (40) sur la pièce d'application de force (14) est décalé également asymétriquement d'une dimension b par rapport à l'axe central du composant plat (12).

5. Dispositif selon une ou plusieurs des revendications précédentes, caractérisé en ce que:

h) la pièce d'application de force (14) est agencée de façon à être divisés dans un plan sensiblement parallèle à la fibre neutre (28) du composant (12) et

i) elle est maintenue assemblée par des vis de blocage (30, 32), ces vis de blocage (30, 32) étant disposées de telle sorte qu'elles ne provoquent aucune interruption des filets de fibres dans le composant (12).

# FIG.1

FIG.3

FIG.2